# EUROPEAN PATENT APPLICATION

(11) **EP 4 712 223 A1**
(43) Date of publication of application: **18.03.2026**
(21) Application number: 25196637.0
(22) Date of filing: 19.08.2025
(51) Int. Cl.: H01M 50/121, H01M 50/124, H01M 50/129, H01M 50/131, H01M 50/134

(54) **BATTERY**

(30) Priority: 17.09.2024 JP 2024160435
(71) Applicant: TOYOTA JIDOSHA KABUSHIKI KAISHA, Toyota-shi, Aichi-ken 471-8571 (JP)
(72) Inventor: ISHIKAWA, Shinya, Toyota-shi, Aichi-ken, 471-8571 (JP); NAGASE, Hiroshi, Toyota-shi, Aichi-ken, 471-8571 (JP); HAMA, Shigenori, Toyota-shi, Aichi-ken, 471-8571 (JP); OSE, Norihiro, Toyota-shi, Aichi-ken, 471-8571 (JP)
(74) Representative: Winter, Brandl - Partnerschaft mbB

(57) **Abstract**

A battery of the present disclosure includes: an electrode body including a solid electrolyte; a case housing the electrode body; and a resin body provided in gaps between the case and end surfaces of the electrode body. The resin body includes a first layer laminated on the end surfaces of the electrode body and a second layer laminated on the first layer. A resin component of the first layer is a resin having a hydroxy group that is less than 100 ppm. The second layer is a layer that electrically insulates the electrode body and the case.

## Description

### BACKGROUND

### Technical Field

The present disclosure relates to a battery.

### Related Art

International Publication No. 2020/090409 discloses a prismatic electrical storage device (hereinafter also called a "battery"). The battery includes an electrode body, an insulating holder (hereinafter also called a "resin body"), a prismatic outer case, and a sealing body. The electrode body has a positive electrode plate, a negative electrode plate, and a separator disposed between the positive electrode plate and the negative electrode plate. The resin body comprises an insulating sheet formed in the shape of a box and houses the electrode body. The outer case has open portions and houses the electrode body and the resin body. The sealing body seals the open portions of the outer case. The insulating sheet has a porous body.

### SUMMARY

A resin component having a hydroxy group tends to adsorb water (e.g., airborne moisture). When the electrode body includes a solid electrolyte and the resin component of the resin body has a hydroxy group, water and the solid electrolyte in the electrode body are likely to come into contact with each other. If water and the solid electrolyte come into contact with each other, the water and the solid electrolyte may react with each other, reducing battery performance (e.g., the ionic conductivity of the solid electrolyte).

The present disclosure has been devised in consideration of the above circumstances.

It is a problem of an embodiment of the disclosure to provide a battery in which reactions between the solid electrolyte and water are inhibited.

Means for solving the above problem include the following aspects.
<1> A battery of a first aspect of the disclosure includes:
   an electrode body including a solid electrolyte;
   a case housing the electrode body; and
   a resin body provided in gaps between the case and end surfaces of the electrode body,
   wherein the resin body includes a first layer laminated on the end surfaces of the electrode body and a second layer laminated on the first layer,
   a resin component of the first layer is a resin having a hydroxy group that is less than 100 ppm, and
   the second layer is a layer that electrically insulates the electrode body and the case.

**In** this disclosure, "a resin having a hydroxy group that is less than 100 ppm" refers to a resin in which the ratio of the mass of the hydroxy group (hereinafter also called "the content of the hydroxy group") to the mass of the resin component of the layer (e.g., the first layer) is less than 100 ppm. The content of the hydroxy group may be found by Fourier transform infrared spectroscopy (FTIR). "A layer that electrically insulates the electrode body and the case" refers to a layer that includes a resin and is electrically insulative. The electrical resistance of the second layer may be equal to or greater than 10¹⁰ Ω·m.

In the first aspect, the resin component of the first layer is a resin having a hydroxy group that is less than 100 ppm. In other words, the first layer tends not to adsorb water (e.g., airborne moisture). Because of this, the electrode body and water are unlikely to come into contact with each other. As a result, the battery of the first aspect is a battery in which reactions between the solid electrolyte and water are inhibited.

<2> A battery of a second aspect of the disclosure is the battery of <1>, wherein the resin body further includes a third layer laminated on the second layer, and a resin component of the third layer is different from the resin component of the first layer.

In the second aspect, the resin component of the third layer is different from the resin component of the first layer. For that reason, the third layer may have a function (e.g., flexibility, thermal conductivity, or adhesiveness) different from the function of the first layer (i.e., the function of tending not to adsorb water). As a result, the battery of the second aspect is a battery having excellent design flexibility.

<3> A battery of a third aspect of the disclosure is the battery of <1> or <2>, wherein the resin body further includes a third layer laminated on the second layer, and a hardness of the third layer is lower than a hardness of the first layer.

"Hardness" refers to JIS-A hardness measured at a room temperature of 23 °C using a type-A durometer (A type) in compliance with JIS K6253.

In the third aspect, the hardness of the third layer is lower than the hardness of the first layer. In other words, the third layer is softer than the first layer. As a result, the battery of the third aspect is a battery with more excellent impact resistance than a configuration where the hardness of the third layer is equal to or higher than the hardness of the first layer.

<4> A battery of a fourth aspect is the battery of any one of <1> to <3>, wherein the resin component of the first layer includes an adhesive resin.

"An adhesive resin" refers to a resin that is adhesive at a normal temperature (23 °C). Specifically, "an adhesive resin" refers to a resin that can be reversibly adhered to an adherend at a normal temperature (23°C).

In the fourth aspect, the resin component of the first layer includes an adhesive resin. For that reason, the resin body is easily held in a state in which it is adhered to the electrode body. The exposed area of the resin body in a state in which it is adhered to the electrode body is smaller than it is in a configuration where the resin body is not adhered to the electrode body. Because of this, the first layer tends not to adsorb water. As a result, the battery of the fourth aspect is a battery in which reactions between the solid electrolyte and water are further inhibited.

<5> A battery of a fifth aspect of the disclosure is the battery of any one of <1> to <4>, wherein the second layer is a film, and a shape of the first layer follows a shape of the second layer.

In the fifth aspect, the second layer is a film. As a result, the battery of the fifth aspect is a battery having more excellent productivity than a configuration where the second layer is not a film.

<6> A battery of a sixth aspect of the disclosure is the battery of any one of <1> to <5>, wherein the resin body further includes a third layer laminated on the second layer, and the third layer includes a thermally conductive filler.

In the sixth aspect, the third layer includes a thermally conductive filler. Because of this, the thermal conductivity of the third layer is more excellent than it is in a configuration where the third layer does not include a thermally conductive filler. As a result, the battery of the sixth aspect is a battery having more excellent cooling performance than a configuration where the third layer does not include a thermally conductive filler.

According to the present disclosure, there is provided a battery in which reactions between the solid electrolyte and water are inhibited.

### BRIEF DESCRIPTION OF THE DRAWINGS

Exemplary embodiments of the present disclosure will be described in detail based on the following figures, wherein:
FIG. 1 is an external perspective view of a battery of a first embodiment;
FIG. 2 is a sectional view of the battery of the first embodiment taken along line II-II of FIG. 1;
FIG. 3 is a sectional view of the battery of the first embodiment taken along line III-III of FIG. 1;
FIG. 4 is a sectional view of an electrode body of the first embodiment taken along line II-II of FIG. 1;
FIG. 5 is a sectional view of the electrode body of the first embodiment taken along line III-III of FIG. 1;
FIG. 6 is a sectional view of a battery of a second embodiment;
FIG. 7 is a sectional view of a battery of a third embodiment; and
FIG. 8 is a sectional view of a battery of a fourth embodiment.

### DETAILED DESCRIPTION

In this disclosure, a numerical range expressed using "to" means a range that includes the numerical values appearing before and after the "to" as a minimum value and a maximum value, respectively. In numerical ranges that are progressively stated in this disclosure, the upper limit value or the lower limit value in a given numerical range may be replaced with the upper limit value or the lower limit value of another progressively stated numerical range. In this disclosure, a combination of two or more preferred aspects is a more preferred aspect. In this disclosure, the term "step" includes not only an independent step but also a step that cannot be clearly distinguished from another step as long as the intended object of that step is achieved.

Embodiments of the battery of this disclosure will be described below with reference to the drawings. Identical or corresponding parts in the drawings are assigned identical reference signs, and description thereof will not be repeated.

The battery in this disclosure includes an all-solid-state battery that uses a solid electrolyte as the electrolyte, and the solid electrolyte may include less than 10% by mass of an electrolyte solution relative to the total amount of the electrolyte. It will be noted that the solid electrolyte may be a composite solid electrolyte including an inorganic solid electrolyte and a polymer electrolyte.

### (1) First Embodiment

### (1.1) Battery

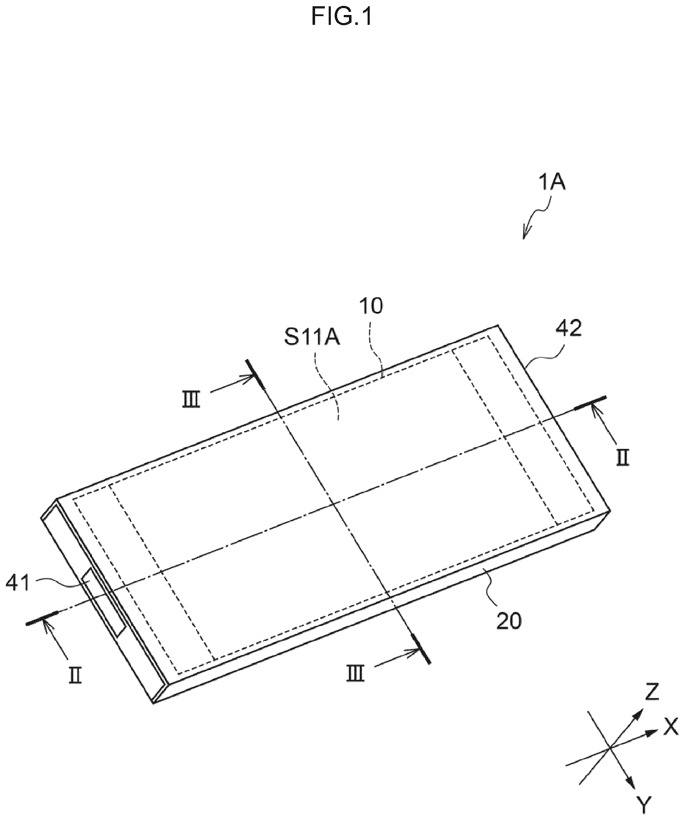

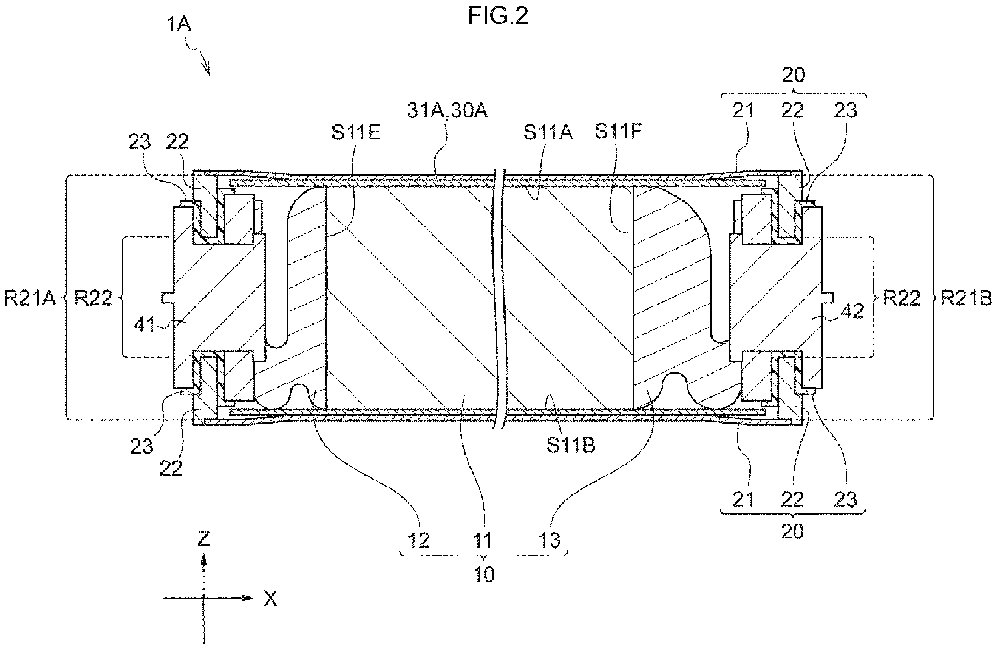

A battery 1A of a first embodiment is a solid-state battery. As shown in FIG. 1, the battery 1A includes an electrode body 10, a case 20, a resin body 30A (see FIG. 2), a positive electrode terminal 41 (see FIG. 2), and a negative electrode terminal 42 (see FIG. 2). The electrode body 10 is a rectangular cuboid.

In the first embodiment, the lengthwise direction of a first main surface S11A of the electrode body 10 defines the X-axis direction. The widthwise direction of the first main surface S11A of the electrode body 10 defines the Y-axis direction. The thickness direction of the electrode body 10 defines the Z-axis direction. The X-axis, the Y-axis, and the Z-axis are orthogonal to each other. The X-axis direction is an example of an axial direction. It will be noted that these directions are not intended to limit the directions of the battery of the disclosure when it is in use. The first main surface S11A is an example of an end surface.

The positive electrode terminal 41, the electrode body 10, and the negative electrode terminal 42 are disposed in this order along the X-axis positive direction. Each of the positive electrode terminal 41 and the negative electrode terminal 42 is electrically connected to the electrode body 10. The resin body 30A is interposed between the electrode body 10 and the case 20. The electrode body 10 and the resin body 30A are sealed by the case 20, the positive electrode terminal 41, and the negative electrode terminal 42.

### (1.1.1) Electrode Body

The electrode body 10 functions as a power generating element of the battery 1A.

As shown in FIG. 2, the electrode body 10 has an electrode main body 11, a plurality of positive electrode current collector tabs 12, and a plurality of negative electrode current collector tabs 13. The plurality of positive electrode current collector tabs 12 and the plurality of negative electrode current collector tabs 13 are electrically connected to the electrode main body 11.

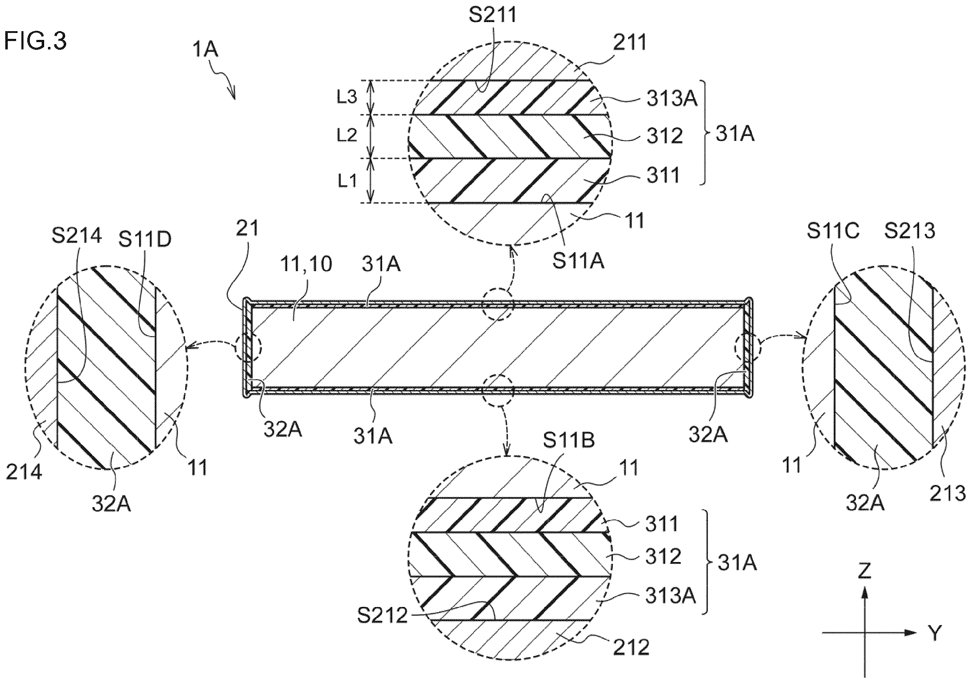

The electrode main body 11 is a rectangular cuboid. As shown in FIG. 3, the electrode main body 11 has the first main surface S11A, a second main surface S11B, a first side surface S11C, a second side surface S11D, a third side surface S11E (see FIG. 2), and a fourth side surface S11F (see FIG. 2). The first main surface S11A opposes the second main surface S11B in the Z-axis direction. The first side surface S11C opposes the second side surface S11D in the Y-axis direction. The third side surface S11E opposes the fourth side surface S11F in the X-axis direction. The first main surface S11A is continuously connected to the first side surface S11C, the second side surface S11D, the third side surface S11E, and the fourth side surface S11F. The second main surface S11B is continuously connected to the first side surface S11C, the second side surface S11D, the third side surface S11E, and the fourth side surface S11F. Each of the second main surface S11B, the first side surface S11C, and the second side surface S11D is an example of an end surface.

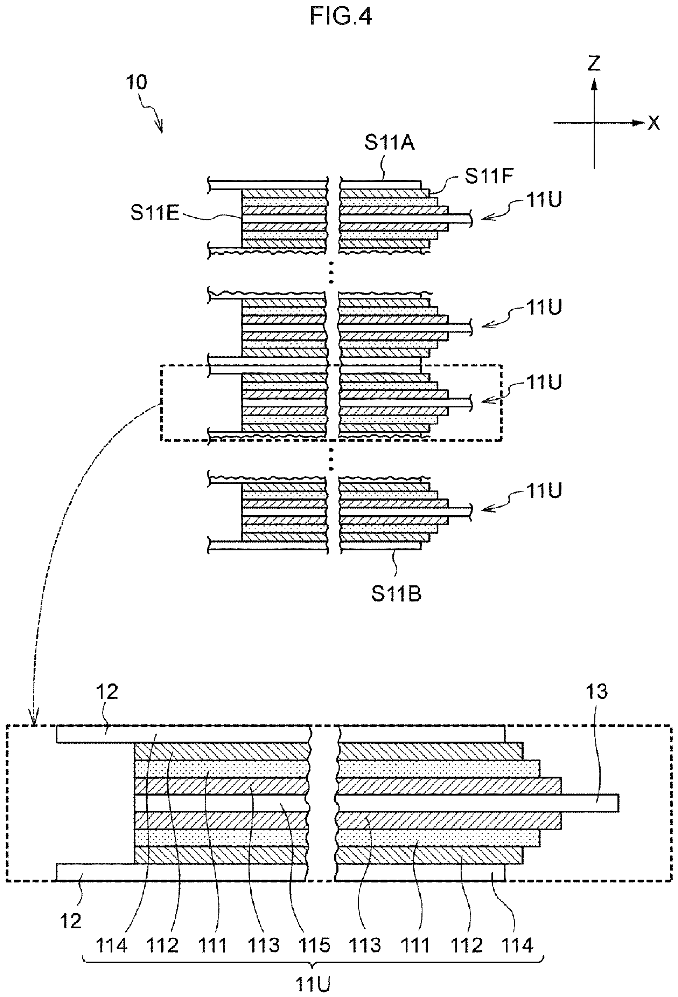

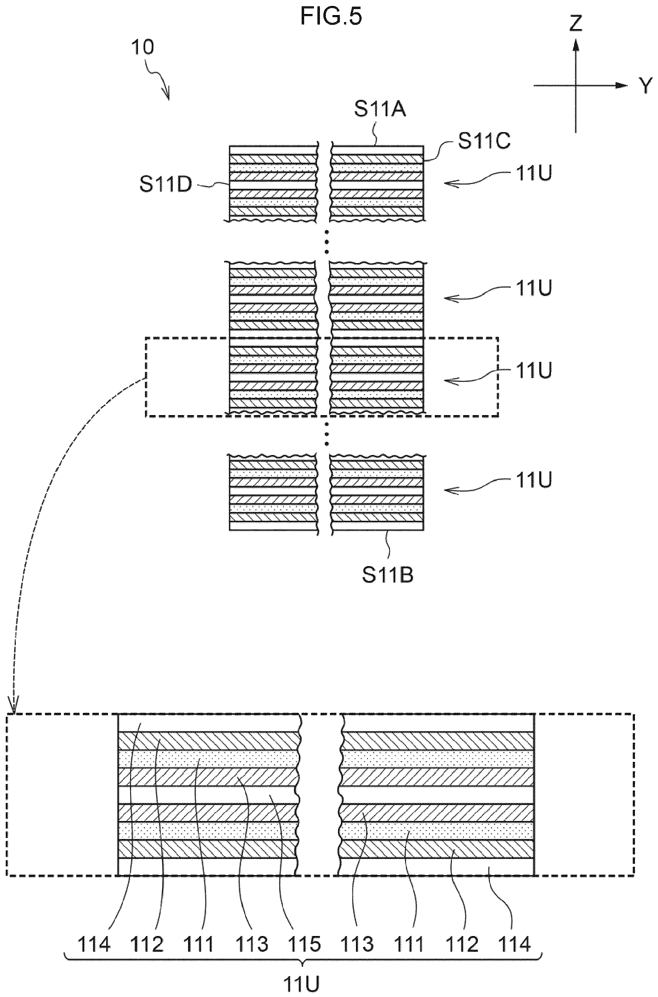

Details about the electrode body 10 will be described further below with reference to FIG. 4 and FIG. 5.

### (1.1.2) Case

The case 20 houses the electrode body 10.

As shown in FIG. 2, the case 20 has a metal tube 21, a pair of covers 22, and electrical insulators 23. The metal tube 21 has a first opening R21A and a second opening R21B. One of the pair of covers 22 closes the first opening R21A of the metal tube 21. The other of the pair of covers 22 closes the second opening R21B of the metal tube 21. The pair of covers 22 are welded to the metal tube 21. The electrical insulators 23 are interposed between each of the positive electrode terminal 41 and the negative electrode terminal 42 and the covers 22.

### (1.1.2.1) Metal Tube

In the first embodiment, as shown in FIG. 3, the metal tube 21 is a rectangular tube. The metal tube 21 has a hollow portion. The hollow portion extends along the X-axis direction. The first opening R21A communicates with the second opening R21B via the hollow portion. The first opening R21A opposes the second opening R21B in the X-axis direction. The first opening R21A is positioned in the X-axis negative direction relative to the second opening R21B.

The metal tube 21 has a first wall portion 211, a second wall portion 212, a third wall portion 213, and a fourth wall portion 214. The first wall portion 211 opposes the first main surface S11A of the electrode main body 11. The second wall portion 212 opposes the second main surface S11B of the electrode main body 11. The third wall portion 213 opposes the first side surface S11C of the electrode main body 11. The fourth wall portion 214 opposes the second side surface S11D of the electrode main body 11. The first wall portion 211 is continuously connected to the third wall portion 213 and the fourth wall portion 214. The second wall portion 212 is continuously connected to the third wall portion 213 and the fourth wall portion 214.

The material of the metal tube is metal (e.g., aluminum, copper, stainless steel (SUS), or nickel).

### (1.1.2.2) Covers

The covers 22 are plate-like objects. As shown in FIG. 2, the covers 22 each have one through hole R22 extending in the X-axis direction. The positive electrode terminal 41 is exposed through the through hole R22 of one of the pair of covers 22. The negative electrode terminal 42 is exposed through the through hole R22 of the other of the pair of covers 22. The material of the covers is metal (e.g., aluminum, copper, stainless steel (SUS), or nickel).

### (1.1.2.3) Electrical Insulators

The electrical insulators 23 prevent electrical contact between each of the positive electrode terminal 41 and the negative electrode terminal 42 and the covers 22. A shape of the electrical insulators 23 is not particularly limited as long as it is a shape interposed between each of the positive electrode terminal 41 and the negative electrode terminal 42 and the covers 22. The material of the electrical insulators may be a known resin (e.g., a thermoplastic resin or a thermosetting resin). The thermoplastic resin may be an elastomer.

### (1.1.3) Resin Body

The resin body 30A electrically insulates the electrode body 10 and the case 20. The resin body 30A is interposed between the electrode main body 11 and the case 20. The resin body 30A is in physical contact with the electrode body 10 and the case 20.

In the first embodiment, the resin body 30A has a pair of three-layer portions 31A and a pair of single-layer portions 32A. As shown in FIG. 3, one of the pair of three-layer portions 31A is provided in a gap (hereinafter also called a "first gap") between the first main surface S11A of the electrode main body 11 and the first wall portion 211 of the metal tube 21. The other of the pair of three-layer portions 31A is provided in a gap (hereinafter also called a "second gap") between the second main surface S11B of the electrode main body 11 and the second wall portion 212 of the metal tube 21. One of the pair of single-layer portions 32A is provided in a gap (hereinafter also called a "third gap") between the first side surface S11C of the electrode main body 11 and the third wall portion 213 of the metal tube 21. The other of the pair of single-layer portions 32A is provided in a gap (hereinafter also called a "fourth gap") between the second side surface S11D of the electrode main body 11 and the fourth wall portion 214. The three-layer portions 31A and the single-layer portions 32A may or may not be welded together.

### (1.1.3.1) Three-layer Portions

The three-layer portions 31A prevent electrical contact between the electrode body 10 and the case 20. The pair of three-layer portions 31A cover the entire first main surface S11A and the entire second main surface S11B of the electrode main body 11.

The three-layer portions 31A each have a first layer 311, a second layer 312, and a third layer 313A. The first layer 311 of one of the pair of three-layer portions 31A is laminated on the first main surface S11A of the electrode main body 11. The first layer 311 of the other of the pair of three-layer portions 31A is laminated on the second main surface S11B of the electrode main body 11. The second layers 312 are laminated on the first layers 311. The third layers 313A are laminated on the second layers 312.

In the first embodiment, the first layers 311, the second layers 312, and the third layers 313A may have different functions.

### (1.1.3.1.1) First Layers

The first layers 311 are layers that tend not to adsorb water (e.g., airborne moisture). The first layers 311 are adhesive and flexible. A shape of the first layers 311 follows the shape of the second layers 312.

A resin component of the first layers includes a resin having a hydroxy group that is less than 100 ppm and being adhesive (hereinafter also called an "adhesive resin"). Examples of the adhesive resin include acrylic resins or silicone resins. The resin component of the first layers may further include a resin having a hydroxy group that is less than 100 ppm and not being adhesive (hereinafter "non-adhesive resin"). Examples of the non-adhesive resin include epoxy resins or polyester resins. For the resin component of the first layers, one type may be used alone or a combination of two or more types may be used.

The first layers may further include compounding agents as needed. Examples of the compounding agents include fillers (e.g., glass fiber, carbon fiber, or inorganic powder), thermostabilizers, antioxidants, pigments, weather resistant agents, flame retardants, plasticizers, dispersants, lubricants, release agents, or antistatic agents.

A thickness L1 of the first layers 311 (see FIG. 3) is not particularly limited. The thickness L1 of the first layers 311 may be thinner than each of a thickness L2 of the second layers 312 (see FIG. 3) and a thickness L3 of the third layers 313A (see FIG. 3).

### (1.1.3.1.2) Second Layers

The second layers 312 are layers that electrically insulate the electrode body 10 and the case 20. The second layers are films.

The resin component of the second layers is not particularly limited as long as it is a resin that can electrically insulate the electrode body 10 and the case 20, and may be a known resin (e.g., a thermoplastic resin or a thermosetting resin). The thermoplastic resin may be an elastomer. The resin component of the second layers may include a resin having a hydroxy group that is less than 100 ppm (i.e., the aforementioned adhesive resin or non-adhesive resin) or may include a resin having a hydroxy group (i.e., a resin having a hydroxy group that is equal to or greater than 100 ppm). The resin component of the second layers may be identical to or different from the resin component of the first layers. For the resin component of the second layers, one type may be used alone or a combination of two or more types may be used.

The second layers may further include compounding agents as needed. Examples of the compounding agents include the same ones as those that were exemplified as compounding agents that can be included in the first layers.

The thickness L2 of the second layers 312 (see FIG. 3) is not particularly limited. The thickness L2 of the second layers 312 may be thicker than each of the thickness L1 of the first layers 311 (see FIG. 3) and the thickness L3 of the third layers 313A (see FIG. 3).

### (1.1.3.1.3) Third Layers

The third layers 313A are layers having excellent thermal conductivity.

The third layers may include a thermally conductive filler. The material of the thermally conductive filler is not particularly limited, and examples thereof include metal oxides (e.g., alumina, silica, or magnesia), metal nitrides (e.g., aluminum nitride, silicon nitride, or boron nitride), artificial diamond, silicon carbide, or carbon nanotubes.

The resin component of the third layers 313A is different from the resin component of the first layers 311. The resin component of the third layers may include a resin having excellent thermal conductivity (hereinafter also called a "thermally conductive resin"). Examples of the thermally conductive resin include polyactylene, polyaniline, polypyrrole, or polythiophene. When the resin component of the third layers includes the thermally conductive resin, the resin component of the third layers 313A may or may not include a thermally conductive filler.

When the third layers include a thermally conductive filler, the resin component of the third layers may include a known resin (e.g., a thermoplastic resin or a thermosetting resin) different from the thermally conductive resin. The thermoplastic resin may be an elastomer. The resin component of the third layers may include a resin having a hydroxy group that is less than 100 ppm (i.e., the aforementioned adhesive resin or non-adhesive resin) or may include a resin having a hydroxy group (i.e., a resin having a hydroxy group that is equal to or greater than 100 ppm) as long as it is different from the resin component of the first layers. For the resin component of the third layers, one type may be used alone or a combination of two or more types may be used.

The third layers may further include compounding agents as needed. Examples of the compounding agents include the same ones as those that were exemplified as compounding agents that can be included in the first layers.

The thickness L3 of the third layers 313A (see FIG. 3) is not particularly limited. The thickness L3 of the third layers 313A may be thicker than the thickness L1 of the first layers 311 (see FIG. 3) and thinner than the thickness L2 of the second layers 312 (see FIG. 3).

### (1.1.3.2) Single-layer Portions

The single-layer portions 32A prevent electrical contact between the electrode body 10 and the case 20.

One of the pair of single-layer portions 32A fills the space between the first side surface S11C of the electrode main body 11 and an inner surface S213 of the third wall portion 213 of the case 20. The other of the pair of single-layer portions 32A fills the space between the second side surface S11D of the electrode main body 11 and an inner surface S214 of the fourth wall portion 214 of the case 20.

The resin component of the single-layer portions 32A may be a known resin (e.g., a thermoplastic resin or a thermosetting resin). The single-layer portions 32A may include at least one of a thermally conductive filler and compounding agents. Examples of the thermally conductive filler include the same ones as those that were exemplified as thermally conductive fillers that can be included in the third layers. Examples of the compounding agents include the same ones as those that were exemplified as compounding agents that can be included in the first layers. The material of the single-layer portions 32A may be identical to the material of the third layers 313A of the three-layer portions 31A.

### (1.1.4) Positive Electrode Terminal and Negative Electrode Terminal

The positive electrode terminal 41 and the negative electrode terminal 42 are used to lead electricity generated by the electrode body 10 to the outside of the battery 1A. Examples of the material of the positive electrode terminal and the negative electrode terminal include metal (e.g., aluminum, stainless steel (SUS), or nickel).

### (1.1.5) Details about Electrode Body

As shown in FIG. 2, the electrode body 10 has the electrode main body 11, the plurality of positive electrode current collector tabs 12, and the plurality of negative electrode current collector tabs 13. As shown in FIG. 4 and FIG. 5, the electrode main body 11 includes a plurality of unit electrode main bodies 11U. The plurality of unit electrode main bodies 11U are laminated along the Z-axis direction. The plurality of unit electrode main bodies 11U are connected in parallel.

As shown in FIG. 4 and FIG. 5, the first side surface S11C, the second side surface S11D, and the third side surface S11E of the electrode main body 11 are surfaces without steps (i.e., flat surfaces). As shown in FIG. 4, the fourth side surface S11F of the electrode main body 11 is a surface with tapered steps (i.e., a stepped surface).

The laminate structure of the unit electrode main bodies 11U is a monopolar structure. Specifically, the unit electrode main bodies 11U each have two solid electrolyte layers 111, two positive electrode active material layers 112, two negative electrode active material layers 113, two positive electrode current collectors 114, and one negative electrode current collector 115. The positive electrode current collector 114, the positive electrode active material layer 112, the solid electrolyte layer 111, the negative electrode active material layer 113, the negative electrode current collector 115, the negative electrode active material layer 113, the solid electrolyte layer 111, the positive electrode active material layer 112, and the positive electrode current collector 114 are laminated in this order along the Z-axis direction.

One positive electrode current collector tab 12 is connected to one positive electrode current collector 114. One negative electrode current collector tab 13 is connected to one negative electrode current collector 115. The number of the positive electrode current collector tabs 12 of the electrode body 10 is greater than the number of the negative electrode current collector tabs 13 of the electrode body 10.

### (1.1.5.1) Solid Electrolyte Layers

The solid electrolyte layers 111 include a solid electrolyte. The solid electrolyte is not particularly limited and may be an aggregate of plural particles. The solid electrolyte preferably includes one selected from the group comprising sulfide solid electrolytes, oxide solid electrolytes, and halide solid electrolytes. The solid electrolyte may be a known solid electrolyte.

The solid electrolyte layer may further include a binder. The binder may be used for binding the solid electrolyte. The binder may be used for binding the solid electrolyte and the positive electrode active material layers 112 or the negative electrode active material layers 113. Examples of the binder include vinyl halide resins (e.g., polyvinylidene fluoride (PVdF)), rubbers (e.g., acrylate-butadiene rubber (ABR) or styrene-butadiene rubber (SBR)), or polyolefin resins (e.g., polyethylene (PE) or polypropylene (PP)).

### (1.1.5.2) Positive Electrode Active Material Layers

The positive electrode active material layers 112 contain a positive electrode active material. The positive electrode active material layers 112 may also contain at least one of a solid electrolyte for a positive electrode, a conductive additive, and a binder as needed.

The positive electrode active material layers 112 preferably include a lithium complex oxide as the positive electrode active material. The lithium complex oxide may contain at least one type selected from the group comprising F, Cl, N, S, Br, and I. Furthermore, the lithium complex oxide may have a crystalline structure belonging to at least one space group selected from the space groups R-3m, Immm, and P63-mmc. Furthermore, the main array of the transition metal, oxygen, and lithium in the lithium complex oxide may have an O2 structure. The positive electrode active material may be a known positive electrode active material.

Examples of the solid electrolyte for a positive electrode include the same ones as those that were exemplified as the solid electrolyte included in the solid electrolyte layers.

Examples of the conductive additive include carbon materials (e.g., carbon black, carbon nanotubes, graphite, or carbon fluoride), metal materials (e.g., aluminum powder or conductive whiskers), or conductive polymer materials (e.g., polyaniline, polypyrrole, or polythiophene).

Examples of the binder include the same ones as those that were exemplified as the binder included in the solid electrolyte layers.

### (1.1.5.3) Negative Electrode Active Material Layers

The negative electrode active material layers 113 contain a negative electrode active material. The negative electrode active material layers 113 may also contain at least one of a solid electrolyte for a negative electrode, a conductive additive, and a binder as needed.

Examples of the negative electrode active material include Li-based active materials (e.g., metallic lithium), carbon-based active materials (e.g., graphite), oxide-based active materials (e.g., lithium titanate), or Si-based active materials (e.g., elemental Si).

Examples of the solid electrolyte for a negative electrode include the same ones as those that were exemplified as the solid electrolyte for a positive electrode that can be used in the positive electrode active material layers.

Examples of conductive additives that can be used in the negative electrode active material layers include the same ones as those that were exemplified as conductive additives that can be used in the positive electrode active material layers.

Examples of binders that can be used in the negative electrode active material layers include the same ones that were exemplified as binders that can be used in the positive electrode active material layers.

### (1.1.5.4) Positive Electrode Current Collectors

The positive electrode current collectors 114 collect current from the positive electrode active material layers 112. The material of the positive electrode current collectors is not particularly limited, and examples thereof include stainless steel, aluminum, copper, nickel, iron, titanium, or carbon. The positive electrode current collectors may be aluminum alloy foil or aluminum foil. The aluminum alloy foil and the aluminum foil may be manufactured using powder. A shape of the positive electrode current collectors is, for example, foil-like or mesh-like. The positive electrode current collectors may have a configuration where a buffer layer, an elastic layer, or a positive temperature coefficient (PTC) thermistor layer is disposed on their surfaces.

### (1.1.5.5) Negative Electrode Current Collectors

The negative electrode current collectors 115 collect current from the negative electrode active material layers 113. The material of the negative electrode current collectors is not particularly limited, and examples thereof include stainless steel, aluminum, copper, nickel, iron, titanium, or carbon. The negative electrode current collectors may be copper foil. The shape of the negative electrode current collectors is, for example, foil-like or mesh-like. The negative electrode current collectors may have a configuration where a buffer layer, an elastic layer, or a positive temperature coefficient (PTC) thermistor layer is disposed on their surfaces.

### (1.1.5.6) Positive Electrode Current Collector Tabs

The positive electrode current collector tabs 12 electrically interconnect the positive electrode current collectors 114 and the positive electrode terminal 41. The positive electrode current collector tabs 12 are connected to the positive electrode current collectors 114. As shown in FIG. 2, the positive electrode current collector tabs 22 project in the X-axis negative direction relative to the third side surface S11E of the electrode main body 11. Specifically, in the first embodiment, a bundle including the plural positive electrode current collector tabs 12 is electrically connected to the positive electrode terminal 41. The positive electrode current collector tabs 12 are preferably formed continuously from the positive electrode current collectors 114. The material of the positive electrode current collector tabs is not particularly limited and may be metal (e.g., aluminum, stainless steel (SUS), or nickel).

### (1.1.5.7) Negative Electrode Current Collector Tabs

The negative electrode current collector tabs 13 electrically interconnect the negative electrode current collectors 115 and the negative electrode terminal 42. The negative electrode current collector tabs 13 are connected to the negative electrode current collectors 115. As shown in FIG. 2, the negative electrode current collector tabs 13 project in the X-axis positive direction relative to the fourth side surface S11F of the electrode main body 11. Specifically, in the first embodiment, a bundle including the plural negative electrode current collector tabs 13 is electrically connected to the negative electrode terminal 42. The negative electrode current collector tabs 13 are preferably formed continuously from the negative electrode current collectors 115. The material of the negative electrode current collector tabs is not particularly limited and may be metal (e.g., aluminum, stainless steel (SUS), or nickel).

### (1.1.6) Applications

Examples of applications of the battery 1A include being a power source for electrical devices (e.g., vehicles, electronic devices, or electrical storages). Examples of vehicles include four-wheeled electric vehicles, two-wheeled electric vehicles, gasoline automobiles, or diesel automobiles. Examples of four-wheeled electric vehicles include battery electric vehicles (BEV), plug-in hybrid electric vehicles (PHEV), or hybrid electric vehicles (HEV). Examples of two-wheeled electric vehicles include electric bikes or pedal-assist electric bicycles. Examples of electronic devices include handheld devices (e.g., smartphones, tablet computers, or audio players), portable devices (e.g., notebook computers or compact disc (CD) players), or movable devices (e.g., electric tools or professional video cameras). Among these, the battery 1A is preferably applied as a power source for driving a hybrid electric vehicle, a plug-in hybrid electric vehicle, or a battery electric vehicle.

### (1.2) Battery Manufacturing Method

A battery manufacturing method of the first embodiment is a method of manufacturing the battery 1A. The manufacturing method includes a preparation step (A), an insertion step, a resin filling step (A), a terminal connection step, and a sealing step. The preparation step (A), the insertion step, the resin filling step (A), the terminal connection step, and the sealing step may be implemented in this order.

### (1.2.1) Preparation Step (A)

In the preparation step (A), an electrode body with resin sheets is prepared. The electrode body with resin sheets has the electrode body 10 and a pair of resin sheets attached to the first main surface S11A and the second main surface S11B of the electrode body 10. The resin sheets are the same as the three-layer portions 31A except that they do not include the third layers 313A.

The method of preparing the electrode body with the resin sheets includes an electrode body preparation step, a resin sheet preparation step, and an attachment step. The electrode body preparation step and the attachment step are implemented in this order. The resin sheet preparation step (A) is implemented before the implementation of the attachment step.

### (1.2.1.1) Electrode Body Preparation Step

In the electrode body preparation step, the electrode body 10 is prepared.

The method of preparing the electrode body 10 may be any known method.

### (1.2.1.2) Resin Sheet Preparation Step

In the resin sheet preparation step, the resin sheets are prepared.

The method of preparing the resin sheets may be any known method.

### (1.2.1.3) Attachment Step

In the attachment step, the resin sheets are attached to each of the first main surface S11A and the second main surface S11B of the electrode body 10. Because of this, the electrode body with the resin sheets is obtained.

The method of attaching the resin sheets may be any known method.

### (1.2.2) Insertion Step

In the insertion step, the electrode body with the resin sheets is inserted into the first opening R21A of the metal tube 21 from the negative electrode current collector tab 13 side to dispose the electrode body with the resin sheets inside the metal tube 21. Because of this, a first incomplete battery is obtained.

The method of inserting the electrode body with the resin sheets may be any known method.

### (1.2.3) Resin Filling Step (A)

In the resin filling step (A), the gaps between the electrode body with the resin sheets and the metal tube 21 of the first incomplete battery are filled with an unsolidified material of a resin composition to form the third layers 313A and the single-layer portions 32A. Specifically, the gap between the first main surface S11A of the electrode main body 11 and an inner surface S211 of the first wall portion 211 of the metal tube 21 and the gap between the second main surface S11B of the electrode main body 11 and an inner surface S212 of the second wall portion 212 of the case 20 are filled with the unsolidified material of the third layers 313A of the three-layer portions 31A. The gap between the first side surface S11C of the electrode main body 11 and the inner surface S213 of the third wall portion 213 of the metal tube 21 and the gap between the second side surface S11D of the electrode main body 11 and the inner surface S214 of the fourth wall portion 214 of the case 20 are filled with the unsolidified material of the single-layer portions 32A. Because of this, a second incomplete battery is obtained.

The method of filling the gaps with the unsolidified material of the third layers 313A and the unsolidified material of the single-layer portions 32A may be any known method. The method of solidifying the unsolidified material of the third layers 313A and the unsolidified material of the single-layer portions 32A is appropriately selected in accordance with the type of the resin.

### (1.2.4) Terminal Connection Step

In the terminal connection step, the plurality of positive electrode current collector tabs 12 of the second incomplete battery are connected to the positive electrode terminal 41, and the plurality of negative electrode current collector tabs 13 are connected to the negative electrode terminal 42. Specifically, in the first embodiment, a first bundle including the plurality of positive electrode current collector tabs 12 is formed, and the first bundle is electrically connected to the positive electrode terminal 41. Likewise, a second bundle including the plurality of negative electrode current collector tabs 13 is formed, and the second bundle is electrically connected to the negative electrode terminal 42. Because of this, a third incomplete battery is obtained.

The connection method is not particularly limited and may be any known method.

### (1.2.5) Sealing Step

In the sealing step, the covers 22 and the electrical insulators 23 are attached to each of the first opening R21A and the second opening R21B of the metal tube 21 of the third incomplete battery to seal the electrode body 10. Because of this, the battery 1A is obtained.

The sealing method is not particularly limited and may be any known method.

### (1.3) Action and Effects

As has been described with reference to FIG. 1 to FIG. 5, the battery 1A includes the electrode body 10, the case 20, and the resin body 30A. The resin body 30Aincludes the first layers 311 and the second layers 312. The resin component of the first layers 311 is a resin having a hydroxy group that is less than 100 ppm. The second layers 312 are layers that electrically insulate the electrode body 10 and the case 20.

The first layers 311 tend not to adsorb water (e.g., airborne moisture). Because of this, the electrode body 10 and water are unlikely to come into contact with each other. As a result, the battery 1A is a battery in which reactions between the solid electrolyte and water are inhibited.

As has been described with reference to FIG. 1 to FIG. 5, in the battery 1A, the resin body 30A further includes the third layers 313A. The resin component of the third layers 313A is different from the resin component of the first layers 311.

For that reason, the third layers 313A may have a function (e.g., flexibility, thermal conductivity, or adhesiveness) different from the function of the first layers 311 (i.e., the function of tending to not adsorb water). As a result, the battery 1A is a battery having excellent design flexibility.

As has been described with reference to FIG. 1 to FIG. 5, in the battery 1A, the resin component of the first layers 311 includes an adhesive resin.

The resin body 30A is easily held in a state in which it is adhered to the electrode body 10. The exposed area of the resin body 30A in a state in which it is adhered to the electrode body 10 is smaller than it is in a configuration where the resin body 30A is not adhered to the electrode body 10. Because of this, the first layers 311 tend not to adsorb water. As a result, the battery 1A is a battery in which reactions between the solid electrolyte and water are further inhibited.

As has been described with reference to FIG. 1 to FIG. 5, in the battery 1A, the second layers 312 are films, and the shape of the first layers 311 follows the shape of the second layers 312.

As a result, the battery 1A is a battery having more excellent productivity than a configuration where the second layers 312 are not films.

As has been described with reference to FIG. 1 to FIG. 5, in the battery 1A, the resin body 30A further includes the third layers 313A. The third layers 313A preferably include a thermally conductive filler.

Because of this, the thermal conductivity of the third layers 313A is excellent. As a result, the battery 1A is a battery having more excellent cooling performance than a configuration where the third layers 313A do not include a thermally conductive filler.

### (2) Second Embodiment

### (2.1) Battery

A battery 1B pertaining to a second embodiment is the same as the battery 1A pertaining to the first embodiment except that the configuration of the resin body is different.

The battery 1B includes the electrode body 10, the case 20, a resin body 30B, the positive electrode terminal 41, and the negative electrode terminal 42.

The resin body 30B electrically insulates the electrode body 10 and the case 20. The resin body 30B is interposed between the electrode main body 11 and the case 20. The resin body 30B is in physical contact with the electrode body 10 and the case 20.

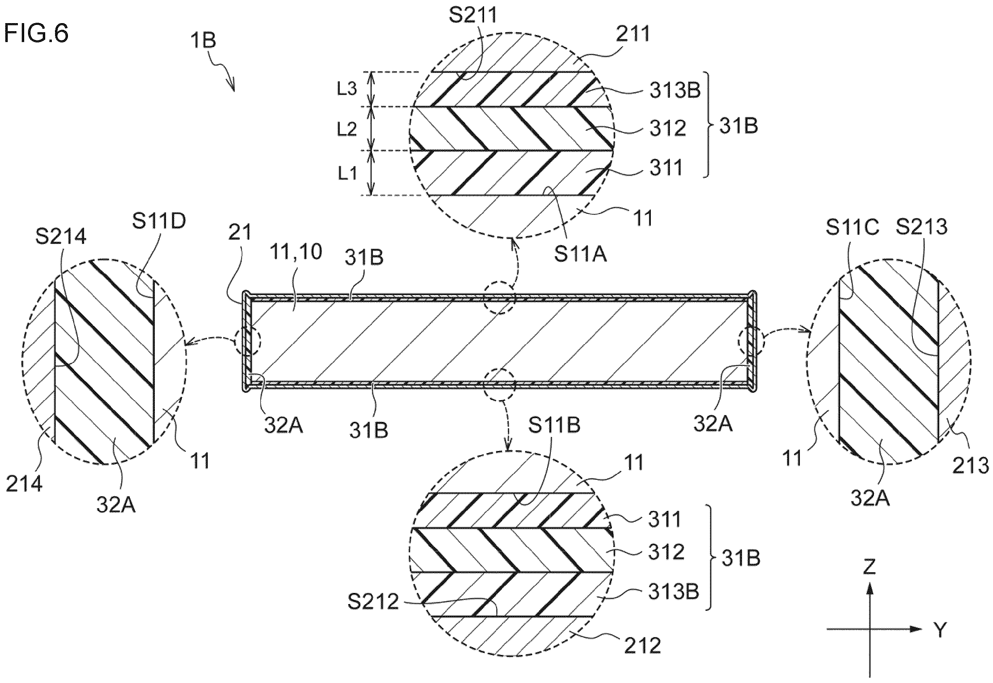

In the second embodiment, the resin body 30B includes a pair of three-layer portions 31B and a pair of single-layer portions 32A. As shown in FIG. 6, one of the pair of three-layer portions 31B is provided in the first gap. The other of the pair of three-layer portions 31B is provided in the second gap. One of the pair of single-layer portions 32A is provided in the third gap. The other of the pair of single-layer portions 32A is provided in the fourth gap. The three-layer portions 31B and the single-layer portions 32A may or may not be welded together.

The three-layer portions 31B each have the first layer 311, the second layer 312, and a third layer 313B. The three-layer portions 31B are the same as the three-layer portions 31A except that the third layers 313A are changed to the third layers 313B.

The third layers 313B are layers whose hardness is lower than a hardness of the first layers 311. The resin component of the third layers 313B is different from the resin component of the first layers 311. The hardness of the third layers 313B tends to be dependent on the type of the resin component. The resin component of the third layers is appropriately selected in accordance with the resin component of the first layers as long as it is a resin with which the hardness of the third layers 313B can be made lower than the hardness of the first layers 311.

The third layers may include a thermally conductive filler. Examples of the material of the thermally conductive filler include the same ones as those that were exemplified as thermally conductive fillers that can be included in the third layers of the first embodiment.

The third layers may further include compounding agents as needed. Examples of the compounding agents include the same ones as those that were exemplified as compounding agents that can be included in the first layers of the first embodiment.

### (2.2) Battery Manufacturing Method

A battery manufacturing method of the second embodiment is a method of manufacturing the battery 1B. The manufacturing method includes a preparation step (B), an insertion step, a resin filling step (B), a terminal connection step, and a sealing step. The preparation step (B), the insertion step, the resin filling step (B), the terminal connection step, and the sealing step may be implemented in this order.

### (2.2.1) Preparation Step (B)

In the preparation step (B), an electrode body with three-layer portions is prepared. The electrode body with the three-layer portions has the electrode body 10 and the pair of three-layer portions 31B attached to the first main surface S11A and the second main surface S11B of the electrode body 10.

The method of preparing the electrode body with the three-layer portions includes an electrode body preparation step, a three-layer portion preparation step, and an attachment step. The electrode body preparation step and the attachment step are implemented in this order. The three-layer portion preparation step (A) is implemented before the implementation of the attachment step.

### (2.2.1.1) Electrode Body Preparation Step

The electrode body preparation step is the same as the electrode body preparation step of the first embodiment.

### (2.2.1.2) Three-layer Portion Preparation Step

In the three-layer portion preparation step, the three-layer portions 31B are prepared.

The method of preparing the three-layer portions 31B may be any known method.

### (2.2.1.3) Attachment Step

In the attachment step, the three-layer portions 31B are attached to each of the first main surface S11A and the second main surface S11B of the electrode body 10. Because of this, the electrode body with the three-layer portions is obtained.

The method of attaching the three-layer portions 31B may be any known method.

### (2.2.2) Insertion Step

In the insertion step, the electrode body with the three-layer portions is inserted into the first opening R21A of the metal tube 21 from the negative electrode current collector tab 13 side to dispose the electrode body with the three-layer portions inside the metal tube 21. Because of this, a first incomplete battery is obtained.

In the second embodiment, the third layers 313B are softer than the first layers 311. For that reason, the electrode body with the three-layer portions can be inserted into the metal tube 21 more easily than in the case of a configuration where the third layers are harder than the first layers.

The method of inserting the electrode body with the three-layer portions may be any known method.

### (2.2.3) Resin Filling Step (B)

In the resin filling step (B), the gaps between the electrode body with the three-layer portions and the metal tube 21 of the first incomplete battery is filled with an unsolidified material of a resin composition to form the single-layer portions 32A. Specifically, the gap between the first side surface S11C of the electrode main body 11 and the inner surface S213 of the third wall portion 213 of the metal tube 21 and the gap between the second side surface S11D of the electrode main body 11 and the inner surface S214 of the fourth wall portion 214 of the case 20 are filled with the unsolidified material of the single-layer portions 32A. Because of this, a second incomplete battery is obtained.

The method of filling the gaps with the unsolidified material of the single-layer portions 32A may be any known method. The method of solidifying the unsolidified material of the single-layer portions 32A is appropriately selected in accordance with the type of the resin.

### (2.2.4) Terminal Connection Step and Sealing Step

The terminal connection step and the sealing step are the same as the terminal connection step and the sealing step of the first embodiment.

### (2.3) Action and Effects

The battery 1B is the same as the battery 1A except that the third layers 313A are changed to the third layers 313B. For that reason, the battery 1B achieves the same action and effects as those of the battery 1A.

As has been described with reference to FIG. 6, in the battery 1B, the resin body 30B further includes the third layers 313B. The hardness of the third layers 313B is lower than the hardness of the first layers 311.

In other words, the third layers 313B are softer than the first layers 311. As a result, the battery 1B is a battery having more excellent impact resistance than a configuration where the hardness of the third layers 313B is equal to or higher than the hardness of the first layers 311.

### (3) Third Embodiment

A battery 1C pertaining to a third embodiment is the same as the battery 1A pertaining to the first embodiment except that the configuration of the resin body is different.

The battery 1C includes the electrode body 10, the case 20, a resin body 30C, the positive electrode terminal 41, and the negative electrode terminal 42.

The resin body 30C electrically insulates the electrode body 10 and the case 20. The resin body 30C is interposed between the electrode main body 11 and the case 20. The resin body 30C is in physical contact with the electrode body 10 and the case 20.

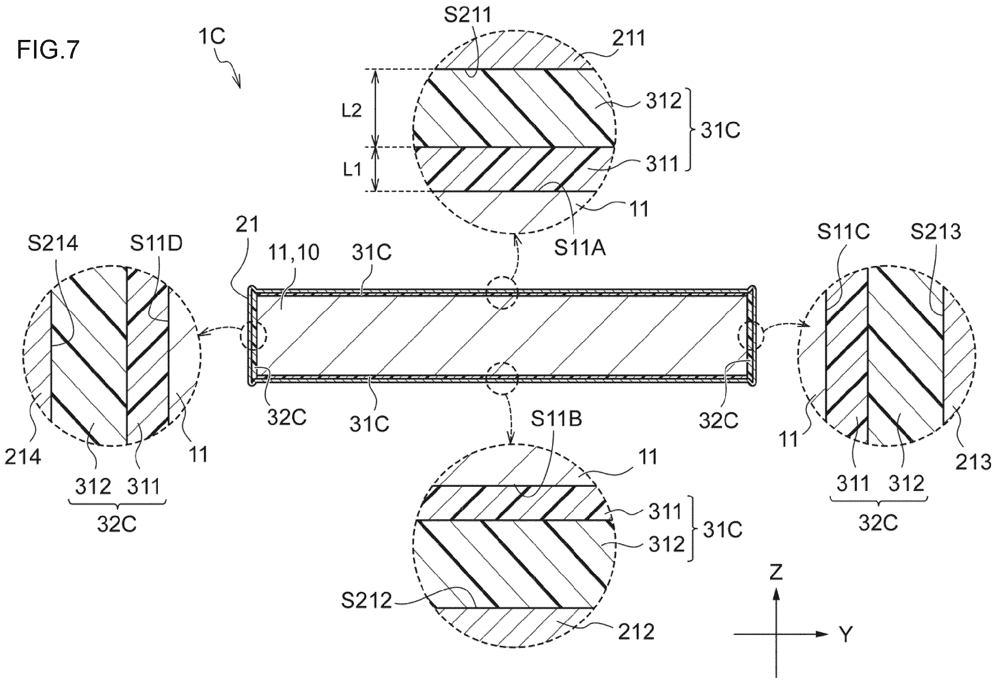

In the third embodiment, the resin body 30C includes a pair of two-layer portions 31C and a pair of two-layer portions 32C. As shown in FIG. 7, one of the pair of two-layer portions 31C is provided in the first gap. The other of the pair of two-layer portions 31C is provided in the second gap. One of the pair of two-layer portions 32C is provided in the third gap. The other of the pair of two-layer portions 32C is provided in the fourth gap.

The two-layer portions 31C and the two-layer portions 32C may be the same body or separate bodies. When the two-layer portions 31C and the two-layer portions 32C are the same body, the resin body 30C may be formed by covering the electrode main body 11 with a first sheet. The first sheet has the same configuration as the two-layer portions 31C.

Each of the two-layer portions 31C and the two-layer portions 32C has the first layer 311 and the second layer 312. Each of the two-layer portions 31C and the two-layer portions 32C is the same as the three-layer portions 31A except that they do not have the third layers 313A.

The battery 1C is the same as the battery 1A except that the resin body 30A is changed to the resin body 30C. For that reason, the battery 1C achieves the same action and effects as those of the battery 1A.

### (4) Fourth Embodiment

A battery 1D pertaining to a fourth embodiment is the same as the battery 1A pertaining to the first embodiment except that the configuration of the resin body is different.

The battery 1D includes the electrode body 10, the case 20, a resin body 30D, the positive electrode terminal 41, and the negative electrode terminal 42.

The resin body 30D electrically insulates the electrode body 10 and the case 20. The resin body 30D is interposed between the electrode main body 11 and the case 20. The resin body 30D is in physical contact with the electrode body 10 and the case 20.

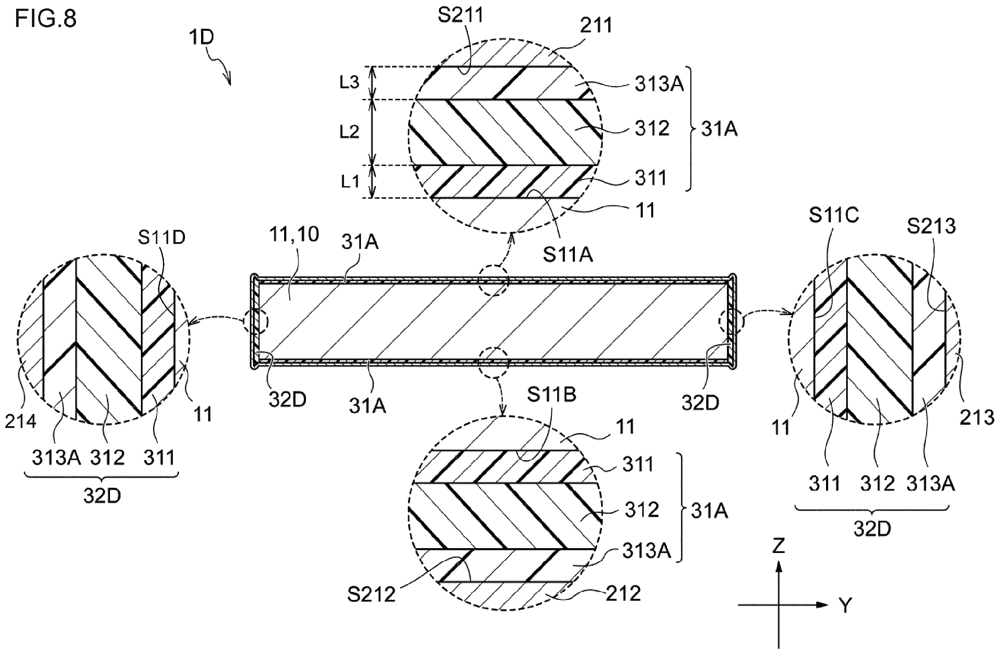

In the fourth embodiment, the resin body 30D includes a pair of three-layer portions 31A and a pair of three-layer portions 32D. As shown in FIG. 8, one of the pair of three-layer portions 31A is provided in the gap between the first main surface S11A of the electrode main body 11 and the first wall portion 211 of the metal tube 21. The other of the pair of three-layer portions 31A is provided in the gap between the second main surface S11B of the electrode main body 11 and the second wall portion 212 of the metal tube 21. One of the pair of three-layer portions 32D is provided between the first side surface S11C of the electrode main body 11 and the third wall portion 213 of the metal tube 21. The other of the pair of three-layer portions 32D is provided in the gap between the second side surface S11D of the electrode main body 11 and the fourth wall portion 214.

The three-layer portions 31A and the three-layer portions 32D may be the same body or different bodies.

When the three-layer portions 31A and the three-layer portions 32D are the same body, the resin body 30D may be formed by covering the electrode main body 11 with a second sheet. The second sheet has the same configuration as the three-layer portions 31A.

The three-layer portions 32D have the same configuration as the three-layer portions 31A. The three-layer portions 32D each have the first layer 311, the second layer 312, and the third layer 313A.

The battery 1D is the same as the battery 1A except that the resin body 30A is changed to the resin body 30D. For that reason, the battery 1D achieves the same action and effects as those of the battery 1A.

### (5) Example Modifications

In the first embodiment, the second embodiment, and the fourth embodiment, the resin component of the third layers 313A, 313B is different from the resin component of the first layers 313, but the disclosure is not limited to this. The resin component of the third layers may be identical to the resin component of the first layers.

In the second embodiment, the hardness of the third layers 313B is lower than the hardness of the first layers 311, but the disclosure is not limited to this. The hardness of the third layers may be identical to the hardness of the first layers or higher than the hardness of the first layers.

In the first embodiment to the fourth embodiment, the resin component of the first layers 311 includes an adhesive resin, but the disclosure is not limited to this. The resin component of the first layers need not include an adhesive resin.

**In** the first embodiment to the fourth embodiment, the second layers 312 are films, but the disclosure is not limited to this. The second layers need not be films. For example, the second layers may be coated films formed on the first layers. **In** the first embodiment to the fourth embodiment, the shape of the first layers 311 follows the shape of the second layers 312, but the disclosure is not limited to this. The shape of the first layers need not follow the shape of the second layers.

**In** the first embodiment, the second embodiment, and the fourth embodiment, the third layers 313A, 313B may include a thermally conductive filler, but the disclosure is not limited to this. The third layers need not include a thermally conductive filler. At least one of the first layers and the second layers may include a thermally conductive filler.

**In** the first embodiment, the resin body 30A includes the pair of three-layer portions 31A provided in the first gap and the second gap and the pair of single-layer portions 32A provided in the third gap and the fourth gap, but the disclosure is not limited to this. As long as the resin body includes the first layers and the second layers, the layer configurations of the resin body portions provided in each of the first gap, the second gap, the third gap, and the fourth gap may be appropriately selected in accordance with the application of the battery for example. Specifically, the layer configuration of the resin body portion provided in the first gap, the layer configuration of the resin body portion provided in the second gap, the layer configuration of the resin body portion provided in the third gap, and the layer configuration of the resin body portion provided in the fourth gap may be the same, or at least one may be different. The function (i.e., the material) of the resin body portion provided in the first gap, the function of the resin body portion provided in the second gap, the function of the resin body portion provided in the third gap, and the function of the resin body portion provided in the fourth gap may be the same, or at least one may be different.

In the first embodiment to the fourth embodiment, the electrode body 10 includes a plurality of the unit electrode main bodies 11U, but the disclosure is not limited to this. The electrode body 10 may also comprise one unit electrode main body 11U.

In the first embodiment to the fourth embodiment, the unit electrode main bodies 11U each comprise the positive electrode current collector 114, the positive electrode active material layer 112, the solid electrolyte layer 111, the negative electrode active material layer 113, the negative electrode current collector 115, the negative electrode active material layer 113, the solid electrolyte layer 111, the positive electrode active material layer 112, and the positive electrode current collector 114 laminated in this order along the Z-axis direction, but the disclosure is not limited to this. The unit electrode main bodies 11U may also each comprise the positive electrode current collector 114, the positive electrode active material layer 112, the solid electrolyte layer 111, the negative electrode active material layer 113, and the negative electrode current collector 115 laminated in this order along the Z-axis direction. The unit electrode main bodies 11U may also each comprise the negative electrode current collector 115, the negative electrode active material layer 113, the solid electrolyte layer 111, the positive electrode active material layer 112, the positive electrode current collector 114, the positive electrode active material layer 112, the solid electrolyte layer 111, the negative electrode active material layer 113, and the negative electrode current collector 115 laminated in this order along the Z-axis direction.

In the first embodiment to the fourth embodiment, the case 20 includes the metal tube 21, but the disclosure is not limited to this. The case may also be a battery can (e.g., cylindrical, prismatic, or coin-shaped) or a laminate case.

In the first embodiment to the fourth embodiment, the positive electrode current collectors 114 and the positive electrode current collector tabs 12 are separate bodies, and the negative electrode current collectors 115 and the negative electrode current collector tabs 13 are separate bodies, but the disclosure is not limited to this. The positive electrode current collectors 114 and the positive electrode current collector tabs 12 may also be the same bodies. The negative electrode current collectors 115 and the negative electrode current collector tabs 13 may also be the same bodies.

In the first embodiment to the fourth embodiment, the laminate configuration of the electrode main body 11 is a configuration where the plurality of unit electrode main bodies 11U having a monopolar structure are connected in parallel, but the disclosure is not limited to this. The laminate configuration of the electrode main body may also be a configuration (hereinafter also called a "monopolar series configuration") where a plurality of unit electrode main bodies having a monopolar structure are connected in series. In a monopolar series configuration, the electrode body has conductors that electrically interconnect the positive electrode current collectors 114 and the negative electrode current collectors 115 and does not have bundles including the plurality of positive electrode current collector tabs 12 or the plurality of negative electrode current collector tabs 13. The laminate configuration of the electrode main body may also be a configuration where a plurality of unit electrode main bodies having a bipolar structure are connected in series.

## Claims

1. A battery comprising:
an electrode body including a solid electrolyte;
a case housing the electrode body; and
a resin body provided in gaps between the case and end surfaces of the electrode body,
wherein the resin body includes a first layer laminated on the end surfaces of the electrode body and a second layer laminated on the first layer,
a resin component of the first layer is a resin having a hydroxy group that is less than 100 ppm, and
the second layer is a layer that electrically insulates the electrode body and the case.

2. The battery of claim 1, wherein the resin body further includes a third layer laminated on the second layer, and a resin component of the third layer is different from the resin component of the first layer.

3. The battery of claim 1, wherein the resin body further includes a third layer laminated on the second layer, and a hardness of the third layer is lower than a hardness of the first layer.

4. The battery of claim 1, wherein the resin component of the first layer includes an adhesive resin.

5. The battery of claim 1, wherein the second layer is a film, and a shape of the first layer follows a shape of the second layer.

6. The battery of claim 1, wherein the resin body further includes a third layer laminated on the second layer, and the third layer includes a thermally conductive filler.
